(19) Europäisches Patentamt
European Patent Office
Office européen des brevets

(11) **EP 2 084 510 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(21) Anmeldenummer: **07821847.6**

(22) Anmeldetag: **25.10.2007**

(51) Int Cl.:
*F02D 19/02* *(2006.01)*   *F02D 41/00* *(2006.01)*
*G01N 7/00* *(2006.01)*

(86) Internationale Anmeldenummer:
**PCT/EP2007/061484**

(87) Internationale Veröffentlichungsnummer:
**WO 2008/049890 (02.05.2008 Gazette 2008/18)**

(54) **VERFAHREN UND VORRICHTUNG ZUM BESTIMMEN DER GASZUSAMMENSETZUNG IN EINEM TANK**

METHOD AND APPARATUS FOR DETERMINING THE GAS COMPOSITION IN A TANK

PROCÉDÉ ET DISPOSITIF DE DÉTERMINATION D'UNE COMPOSITION GAZEUSE DANS UN RÉSERVOIR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.10.2006 DE 102006050357**

(43) Veröffentlichungstag der Anmeldung:
**05.08.2009 Patentblatt 2009/32**

(73) Patentinhaber: **Continental Automotive GmbH 30165 Hannover (DE)**

(72) Erfinder:
• **BAUER, Erwin
93138 Lappersdorf (DE)**
• **ELLMER, Dietmar
93059 Regensburg (DE)**

(56) Entgegenhaltungen:
**US-A- 5 333 591        US-A- 5 367 999
US-A1- 2002 095 262**

• **WILLIAMS ET AL: "Physics of gases" 1. März 2006 (2006-03-01), , PAGE(S) 97-100 , XP005770248 Seite 98, Spalte 1**

**Beschreibung**

Die vorliegende Erfindung bezieht sich auf ein Verfahren zum Bestimmen der Zusammensetzung eines Gasgemischs in einem Tank, wobei das Gasgemisch insbesondere ein Brenngas für eine Brennkraftmaschine ist. Ferner bezieht sich die vorliegende Erfindung auf eine Vorrichtung, beispielsweise ein Steuergerät, für eine Brennkraftmaschine, die die Zusammensetzung eines Brenngases für die Brennkraftmaschine bestimmt und in Abhängigkeit von der Zusammensetzung die Brennkraftmaschine steuert. Bei dem Gasgemisch handelt es sich insbesondere um Erdgas.

Für den Betrieb von Kraftfahrzeugen ist neben Diesel- und Otto-Kraftstoffen unter anderem auch Erdgas verwendbar. Das Erdgas wird in einem Drucktank bei 200 bar oder mehr im Fahrzeug mitgeführt. Für die Betankung stehen verschiedene Erdgasqualitäten zur Verfügung. Diese unterscheiden sich in erster Linie durch ihre Methan- und Stickstoff-Anteile sowie ihre Heizwerte und Luftbedarfs-Werte. In Deutschland wird Erdgas für Kraftfahrzeuge vor allem in zwei Qualitäten angeboten. H-Gas enthält zwischen 87% und 99,1% Methan ($CH_4$; alle Anteile sind hier und im Folgenden als Volumenprozent bzw. Stoffmengenanteile angegeben, wenn nicht ausdrücklich anders dargestellt) und weist einen Luftbedarf bis zu ca. 9,5 kg/kg und einen Heizwert zwischen 47,2 MJ/kg bzw. 13,1 kWh/kg und 49,23 MJ/kg bzw. 13,7 kWh/kg auf. L-Gas weist zwischen 79,8% und 87% Methan, bis zu 11,8% Stickstoff, einen Luftbedarf von ca. 8,5 kg/kg und einen Heizwert zwischen 38,4 MJ/kg bzw. 10,7 kWh/kg und 40,5 MJ/kg bzw. 11,3 kWh/kg auf. Vor allem die unterschiedlichen Luftbedarfswerte, aber auch Unterschiede in den Heizwerten, der Klopffestigkeit und anderen Parametern machen es erforderlich, dass der Verbrennungsmotor bzw. die Brennkraftmaschine mit Betriebsparametern betrieben wird, die an das im Kraftstofftank momentan vorliegende und der Brennkraftmaschine zugeführte Gasgemisch angepasst sind.

Herkömmliche Motorsteuerungen bzw. Steuerungen von Brennkraftmaschinen sind in der Lage, bei einer dauerhaften Lambda-Verschiebung, wie sie beispielsweise aus einer Veränderung der Kraftstoffqualität herrühren kann, eine Lambda-Korrektur bzw. eine Anpassung des Lambda-Reglers vorzunehmen. Für einen qualitativ hochwertigen Betrieb einer Brennkraftmaschine ist es jedoch wünschenswert, die Kraftstoffzusammensetzung und Kraftstoffqualität von vornherein zu kennen.

Die Aufgabe der vorliegenden Erfindung besteht somit darin, ein verbessertes Verfahren und eine Vorrichtung zum Bestimmen der Zusammensetzung eines Gasgemisches in einem Tank.

Diese Aufgaben werden durch ein Verfahren gemäß Anspruch 1 und durch eine Vorrichtung gemäß Anspruch 9 gelöst. Bevorzugte Weiterbildungen der vorliegenden Erfindung sind in den abhängigen Ansprüchen definiert.

Der Artikel Williams et al: "Physics of gases", 1. März 2006 (2006-03-01), Seiten 97 bis 100, beschreibt Eigenschaften idealer Gase, deren Verhalten durch das ideale Gasgesetz approximiert werden kann.

Die DE 10 2006 022 357 B3 beschreibt ein Verfahren und eine Vorrichtung zur Ermittlung der Zusammensetzung eines Gasgemisches eines mit CNG-Gas befüllten Kraftstofftanks eines Kraftfahrzeugs. Dabei wird der Dampfdruck wenigstens eines in dem Gasgemisch vorhandenen Gases, insbesondere für Ethan, Propan und/oder Butan ermittelt. Bei Unterschreitung des Dampfdrucks eines der Bestandteile des CNG-Gases im Kraftstofftank wird eine entsprechende aktuelle Zusammensetzung des Gasgemisches bestimmt.

Die deutsche Industrienorm 51896-2 beschreibt die Umrechnung zwischen von zur Beschreibung von Gasgemischen gebräuchlichen Zusammensetzungsgrößen wie Stoffmengenanteil, Volumenanteil, Massenanteil, Stoffmengenkonzentration, Volumenkonzentration und Massenkonzentration. Dabei wird auch behandelt, welche Umrechnungen den Wert eines Realgasfaktors des betreffenden Gasgemisches erfordern und mit welcher Unsicherheit verschiedene in der Gasanalyse gebräuchliche Nährungen für diesen Realgasfaktor behaftet sind.

Die DE 93 03 589 U1 beschreibt eine Vorrichtung zur Steuerung einer Gasverbrauchseinrichtung, insbesondere eines Gasmotors, in Abhängigkeit von der Zusammensetzung eines Brenngases. Zur Erfassung der Beschaffenheit des Brenngases kommen in der Nähe des Gasverbrauchers angeordnete Gassensoren nach dem Wärmeleitfähigkeitsprinzip zum Einsatz.

Die US 5,367,999 beschreibt ein System und ein Verfahren zur Zufuhr von Brennstoff bei einer gasbetriebenen Brennkraftmaschine. Die Brennstoffzufuhr wird unter anderem in Abhängigkeit von der Zusammensetzung des gasförmigen Brennstoffs geregelt. Die Brennstoffzusammensetzung wird mittels eines Brennstoffzusammensetzungssensors erfasst.

Die US 2002/0095262 A1 beschreibt ein Verfahren zum Bestimmen des Verhältnisses der Komponenten eines mindestens zweikomponentigen Gasgemisches zueinander. Das Verfahren umfasst Schritte zum Messen eines Drucks, einer Temperatur und einer Dichte des Gasgemisches und zum Berechnen des genannten Verhältnisses aus den gemessenen Größen.

Die vorliegende Erfindung beruht auf der Idee, aus der Masse eines in einem vorbestimmten Zeitintervall aus einem Tank entnommenen Gasgemisches und dem resultierenden Druckabfall in dem Tank auf die Zusammensetzung des Gasgemisches zu schließen. Vorzugsweise wird dazu insbesondere aus der entnommenen Masse und der Druckdifferenz die mittlere Teilchenmasse des Gasgemisches berechnet. Die Masse des in dem vorbestimmten Zeitintervall entnommenen Gasgemisches wird mit einem Gasmassenfluss-Messgerät, insbesondere durch Integration von dessen Ausgangssignal, bestimmt. Bei Verbrennung des aus dem Tank entnommenen Gasgemisches mit Luft in einer Brennkraftmaschine (beispielsweise Hubkolbenmaschine nach dem Diesel- oder dem Otto-Prinzip oder Turbine) wird die Masse des in dem vorbestimmten Zeitintervall aus dem Tank entnommenen Gasgemisches vorzugsweise aus der Masse der im vorbestimmten Zeitintervall der Brennkraftmaschine zugeführten Luft, dem Lambda-Wert und dem Luftbedarf des Gasgemisches bzw. einem Schätzwert des Luftbedarfs des Gasgemisches berechnet. Die Masse der in dem vorbestimmten Zeitintervall der Brennkraftmaschine zugeführten Luft wird mit einem Gasmassenfluss-Messgerät gemessen oder mithilfe eines mathematischen Modells der Brennkraftmaschine (auch bekannt als Saugrohrmodell) aus den Betriebsparametern der Brennkraftmaschine berechnet.

Ein Vorteil der vorliegenden Erfindung besteht darin, dass die Zusammensetzung des Gasgemisches und damit seine Qualität aus einfach erfassbaren Parametern bestimmt wird. Die vorliegende Erfindung ist deshalb kostengünstig implementierbar und insbesondere in ein Steuergerät einer Brennkraftmaschine integrierbar, um Betriebsparameter der Brennkraftmaschine zu steuern, insbesondere die einzublasende Kraftstoffmenge, die Einblasedauer, den Zündzeitpunkt oder die Phasenverschiebung zwischen Kurbelwelle und Nockenwelle.

Die vorliegende Erfindung ist in Form eines Verfahrens, eines Computerprogramms zur Ausführung oder Steuerung der Schritte des Verfahrens und in Form einer Vorrichtung, insbesondere eines Steuergeräts für eine Brennkraftmaschine implementierbar.

Bevorzugte Weiterbildungen der vorliegenden Erfindung werden nachfolgend mit Bezug auf die beiliegenden Figuren näher erläutert. Es zeigen:

Fig. 1 eine schematische Darstellung einer Brennkraftmaschine mit einem Steuergerät gemäß der vorliegenden Erfindung;

Fig. 2 ein schematisches Masse-Druck-Diagramm; und

Fig. 3 ein schematisches Flussdiagramm eines Verfahrens gemäß der vorliegenden Erfindung.

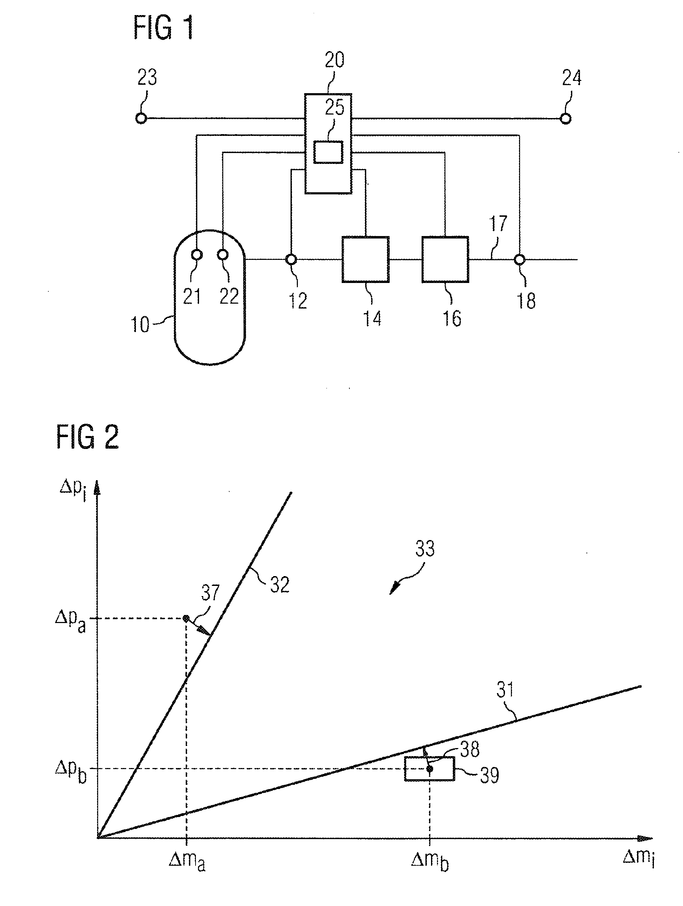

Fig. 1 ist eine schematische Darstellung eines Tanks 10, der über ein Gasmassenfluss-Messgerät 12 und eine Einblaseinrichtung 14 mit einer Brennkraftmaschine 16 verbunden ist. In einer Abgasleitung 17 der Brennkraftmaschine 16 ist eine Lambda-Sonde 18 angeordnet. Ein Steuergerät 20 bzw. entsprechende Signaleingänge desselben sind mit einem Drucksensor 21 und einem Temperatursensor 22 in dem Tank 10 sowie mit einem Umgebungsdruck-Sensor 23 und einem Gaspedal 24 verbunden. Darüber hinaus weist das Steuergerät 20 eine Berechnungseinrichtung 25 auf.

Der Tank 10 enthält ein Gasgemisch, das als Brenngas bzw. Kraftstoff für die Brennkraftmaschine 16 vorgesehen ist. Das Gasgemisch aus dem Tank 10 wird der Brennkraftmaschine 16 über das Gasmassenfluss-Messgerät 12 und die Einblaseinrichtung 14 zugeführt. Das Gasmassenfluss-Messgerät 12 misst den Gasmassenfluss (beispielsweise in g/s) und kann alternativ zwischen der Einblaseinrichtung 14 und der Brennkraftmaschine 16 angeordnet oder in die Einblaseinrichtung integriert sein. Die Einblaseinrichtung 14 steuert die in die Brennkraftmaschine 16 eingeblasene Menge des aus dem Tank 10 entnommenen Gasgemisches. Gemäß einer Variante des dargestellten Beispiels steuert die Einblaseinrichtung 14 darüber hinaus den Zeitpunkt des Einblasens des Gasgemisches in die Brennkraftmaschine 16 und/oder die der Brennkraftmaschine 16 zugeführte Masse an Luft. Die Einblaseinrichtung 14 kann alternativ teilweise oder vollständig in die Brennkraftmaschine integriert sein.

In der Brennkraftmaschine 16 wird das ihr über die Einblaseinrichtung 14 zugeführte Gasgemisch mit Luft verbrannt, um mechanische Leistung zu erzeugen. Bei der Verbrennung entsteht Abgas, das über die Abgasleitung 17 abgeleitet wird. Die Lambda-Sonde 18 misst den Lambda-Wert des Abgases. Dieser Lambda-Wert beschreibt die Abweichung des Verhältnisses Luft zu Brenngas vom stöchiometrischen Gemisch. Bei $\lambda = 1$ liegt das stöchiometrische Gemisch vor, sowohl das Brenngas als auch der in der Luft enthaltene Sauerstoff werden vollständig umgesetzt. Bei $\lambda < 1$ liegt ein Mangel an Luft vor (fettes Gemisch), bei $\lambda > 1$ liegt ein Luftüberschuss vor (mageres Gemisch).

Das Steuergerät 20 weist einen Drucksignaleingang zum Empfangen eines Drucksignals von dem Drucksensor 21 und einen Temperatursignaleingang zum Empfangen eines Temperatursignals von dem Temperatursensor 22 auf. Ferner umfasst das Steuergerät 12 einen Gasmassenflusssignaleingang zum Empfangen eines Gasmassenflusssignals von dem Gasmassenfluss-Messgerät 12, einen Lambda-Signaleingang zum Empfangen eines Lambda-Signals von der Lambda-Sonde 18, einen Sollwertsignaleingang zum Empfangen eines Sollwertsignals von dem Gaspedal 24 und optional weitere Betriebsparametersignaleingänge zum Empfangen von Betriebsparametersignalen von der Brennkraftmaschine 16 auf. Insbesondere kann das Steuergerät 12 einen Umgebungsdrucksignaleingang zum Empfangen eines Umgebungsdrucksignals vom Umgebungsdrucksensor 23 umfassen. Ferner weist das Steuergerät 10 einen Steuersignalausgang zum Ausgeben eines Steuersignals an die Einblaseinrichtung 14 auf.

Das Steuergerät 12 ist so ausgebildet, dass es die Einblaseinrichtung 14 und/oder weitere die Brennkraftmaschine 16 bzw. deren Betriebsparameter beeinflussende Einrichtungen in Abhängigkeit von dem Drucksignal des Drucksensors 21, dem Temperatursignal des Temperatursensors 22, dem Gasmassenflusssignal des Gasmassenfluss-Messgeräts 12, dem Umgebungsdrucksignal des Umgebungsdruck-Sensors 23, dem Lambda-Signal von der Lambda-Sonde 18, dem Sollwertsignal vom Gaspedal 24 und weiteren Betriebsparametersignalen von der Brennkraftmaschine 16 wie nachfolgend beschrieben steuert. Dabei gibt das Sollwertsignal vom Gaspedal 24 vorzugsweise einen Sollwert für ein von der Brennkraftmaschine 16 abzugebendes Drehmoment vor. Das Steuergerät 20 steuert die von der Einblaseinrichtung 14 in die Brennkraftmaschine 16 eingeblasene Brenngasmenge und weitere Betriebsparameter der Brennkraftmaschine, wie z.B. den Zündzeitpunkt oder die Phase zwischen der Nockenwelle und der Kurbelwelle, so, dass das von der Brennkraftmaschine 16 abgegebene Drehmoment dem von der Stellung des Gaspedals 24 vorgegebenen Sollwert entspricht und ein minimaler Kraftstoffverbrauch und minimale Schadstoffmengen entstehen.

Der Tank 10 enthält ein Gasgemisch unbekannter Zusammensetzung, vorzugsweise insbesondere eine Mischung aus unbekannten Anteilen der oben beschriebenen Kraftstoffqualitäten H-Gas und L-Gas. Das in dem Tank 10 enthaltene Gasgemisch wird zur Verbrennung in der Brennkraftmaschine 16 aus dem Tank 10 entnommen und bei einem Tankvorgang wieder ersetzt.

Die Zusammensetzung des dem Tank 10 beim Tankvorgang zugeführten Gasgemisches ist dem Steuergerät 20 nicht bekannt. Darüber hinaus enthält sowohl H-Gas als auch L-Gas neben Methan ($CH_4$) auch schwerere Kohlen-wasserstoffe, insbesondere Ethan ($C_2H_6$), Propan ($C_3H_8$) und Butan ($C_4H_{10}$) sowie Stickstoff ($N_2$) und Kohlenstoffdioxid ($CO_2$). Bei den im Tank 10 vorherrschenden Drücken von bis zu 200 bar oder auch mehr liegen diese Bestandteile teilweise in flüssiger Form vor. So beträgt beispielsweise bei 20°C der Dampfdruck von Ethan 37,8 bar, von Propan 8,5 bar und von Butan 2,0 bar. Ein Teil des auch bei 200 bar und 20°C gasförmig vorliegenden Methans löst sich in der flüssigen Phase im Tank 10.

Durch diese Einflüsse ändert sich die Zusammensetzung des aus dem Tank 10 entnommenen Gasgemisches nicht nur bei jedem Tankvorgang, sondern (in weit geringerem Maße) auch während des Entleerens des Tanks 10. Die Qualität, insbesondere der Luftbedarf, aber auch der Heizwert, des momentan im Gasvolumen des Tanks 10 vorliegenden, dem Tank 10 entnommenen und der Brennkraftmaschine 16 zugeführten Gasgemisches ist jedoch eine wichtige Eingangsgröße für das Steuergerät 20. Insbesondere ist die Kraftstoffqualität für eine optimale Steuerung der Brennkraftmaschine im Hinblick auf den Gemischbildungs- und Verbrennungsprozess sowie auf die Abgasqualität und den Kraftstoffverbrauch und vor allem im In-Stationär-Betrieb von erheblicher Bedeutung. Sie wird deshalb vom Steuergerät 20 wie nachfolgend beschrieben bestimmt.

Die gasförmige Komponente im Tank ist in guter Näherung als ideales Gas beschreibbar, für welches das ideale Gasgesetz

$$pV = NkT \qquad \text{(Gleichung 1)}$$

gilt. Dabei ist p der Druck im Tank, $V$ das Volumen der gasförmigen Komponente im Tank, $N$ die Anzahl der Gasteilchen in der gasförmigen Komponente, $k$ die Boltzmann-Konstante ($k$ = 1,38065·10^{-23} JK^{-1}), $T$ die Temperatur. Das Volumen $V$ der gasförmigen Komponente im Tank entspricht dem Gesamtvolumen des Tanks abzüglich des von der flüssigen Komponente eingenommenen Volumens. In der Regel können in guter Näherung das von der flüssigen Komponente im Tank eingenommene Volumen vernachlässigt und das von der gasförmigen Komponente eingenommene Volumen $V$ mit dem Gesamtvolumen des Tanks gleichgesetzt werden.

Im Folgenden wird das ideale Gasgesetz mit der Masse $m$ der gasförmigen Komponente im Tank ausgedrückt,

$$pV = mRT. \qquad \text{(Gleichung 2)}$$

Dabei ist R nicht die Gaskonstante ($R = N_A k$ = 8,3143 JK^{-1}mol^{-1}) sondern, wie sich aus dem Vergleich der Gleichungen 1 und 2 ($Nk = mR$) ergibt,

$$R = \frac{Nk}{m} = \frac{k}{M}. \qquad \text{(Gleichung 3)}$$

$R$ wird als stoffspezifische Gaskonstante bezeichnet. $M$ ist die mittlere Teilchenmasse in der gasförmigen Komponente,

$$M = \frac{\sum_g N_g M_g}{\sum_g N_g} = \sum_g c_g M_g \ , \qquad \text{(Gleichung 4)}$$

wobei über alle Teilchensorten bzw. Gase $g$ summiert wird, die in der gasförmigen Komponente enthalten sind. Dabei ist $N_g$ ist die Anzahl der Teilchen der Sorte $g$ in der gasförmigen Komponente und $c_g = n_g \Big/ \sum_{g'} n_{g'}$ der Anteil (bezogen auf Teilchenzahl bzw. Stoffmenge) der Teilchensorte bzw. des Gases $g$ in der gasförmigen Komponente. Für jede Teilchensorte $g$ beträgt der Partialdruck

$$p_g = N_g \frac{kT}{V} \ . \qquad \text{(Gleichung 5)}$$

Beispielsweise kann für CNG in guter Näherung angenommen werden , dass das dem Tank als Brenngas entnommene Gasgemisch nur Methan ($CH_4$), Ethan ($C_2H_6$), Propan ($C_3H_8$), Butan ($C_4H_{10}$) und Stickstoff ($N_2$) enthält. In dieser Näherung ist die mittlere Teilchenmasse

$$M = c_{Methan} M_{Methan} + c_{Ethan} M_{Ethan} + c_{Propan} M_{Propan} + c_{Butan} M_{Butan} + c_{Stickstoff} M_{Stickstoff} \ .$$
$$\text{(Gleichung 6)}$$

Aus der Linearität des idealen Gasgesetztes folgt ein linearer Zusammenhang zwischen einer in einem Zeitintervall $i$ der Länge $\Delta t_i = t_{i+1} - t_i$ zwischen einem ersten Zeitpunkt $t_i$ und einem zweiten Zeitpunkt $t_{i+1}$ aus der gasförmigen Komponente im Tank entnommenen Gasmasse $\Delta m_i$ und der dadurch hervorgerufenen Druckänderung $\Delta p_i = p(t_i) - p(t_{i+1})$,

$$\Delta p_i = \frac{RT}{V} \Delta m_i = \frac{kT}{M_i V} \Delta m_i \ . \qquad \text{(Gleichung 7)}$$

Die entnommene Gasmasse $\Delta m_i$ wird durch Integration des Signals eines Gasmassenfluss-Messgeräts in der Brenngas-Zuleitung gewonnen, die Druckänderung $\Delta p_i$ wird durch einen Drucksensor, die Temperatur wird durch einen Temperatursensor im Tank gemessen. Die entnommene Gasmasse $\Delta m_i$ wird alternativ mit dem Lambda-Faktor $\lambda$ und dem stöchiometrischen Luftbedarf $L_{stöch.Gasgemisch}$ aus der der Brennkraftmaschine zugeführten Luftmasse $\Delta m_{Luft.i}$ bestimmt,

$$\Delta m_i = \frac{\Delta m_{Luft.i}}{\lambda L_{stöch.Gasgemisch}} \ . \qquad \text{(Gleichung 8)}$$

Der Lambda-Faktor A wird durch eine Lambda-Sonde im Abgasstrom erfasst. Die der Brennkraftmaschine zugeführte Luftmasse kann durch Integration des Signals eines Gasmassenfluss-Messgeräts in der Luftzuleitung oder mittels eines Saugrohrmodells ermittelt werden. Bei einem Saugrohrmodell wird die zugeführte Luftmasse mit Hilfe eines mathematischen Modells der Strömung im Saugrohr aus dem Umgebungsdruck, der Temperatur der angesaugten Luft, der Drehzahl der Brennkraftmaschine, der Einstellung der Nockenwelle und ggf. weiterer Betriebsparametern berechnet.
Der stöchiometrische Luftbedarf $L_{stöch.i}$ beträgt für ein Gemisch aus den Gasen $g$ im Zeitintervall $i$

$$L_{stöch,i} = \sum_g a_{g,i} L_{stöch,g} \qquad \text{(Gleichung 9)}$$

bzw. in der oben erwähnten Näherung, dass das Gasgemisch nur Methan, Ethan, Propan, Butan und Stickstoff enthält,

$$L_{stöch,i} = a_{Methan,i} L_{stöch,Methan} + a_{Ethan,i} L_{stöch,Ethan} + a_{Propan,i} L_{stöch,Propan} + a_{Butan} L_{stöch,Butan} \cdot$$

$$\text{(Gleichung 10)}$$

Dabei ist $a_{g,i} = c_{g,i} M_g \Big/ \sum_g c_g M_g$ der Massenanteil des Gases $g$ im Zeitintervall $i$. In alternativen Näherungen wird der stöchiometrische Luftbedarf $L_{stöch,H\text{-}Gas}$ = 16,87 kg/kg von H-Gas ( $C_{Methan} \approx 0{,}9805$, $C_{Ethan} \approx 0{,}0072$ , $C_{Stickstoff} \approx 0{,}0084$ ) oder der stöchiometrische Luftbedarf $L_{stöch,L\text{-}Gas}$ = 13, 83 kg/kg von L-Gas ($C_{Methan} \approx 0{,}8647$ , $C_{Ethan} \approx 0{,}0129$ , $C_{Stickstoff} \approx 0{,}1180$) oder der stöchiometrische Luftbedarf der im vorangehenden Zeitintervall $\Delta t_{i\text{-}1}$ ermittelten Gaszusammensetzung verwendet.

Aus der dem Tank entnommenen Gasmasse $\Delta m_i$ und der dadurch hervorgerufenen Druckänderung $\Delta p_i$ wird die mittlere Teilchenmasse $M_i = \sum_g c_{g,i} M_g$ im Zeitintervall $i$ bestimmt,

$$M_i = \frac{kT}{V} \frac{\Delta m_i}{\Delta p_i}\ , \qquad \text{(Gleichung 11)}$$

aus der wiederum auf die Zusammensetzung des dem Tank entnommenen Gasgemisches geschlossen wird.

Im Falle einer Bestimmung der aus dem Tank entnommenen Gasmasse aus der Luftmasse $\Delta m_{Luft,i}$, dem Lambda-Faktor $\lambda$ und dem stöchiometrischen Luftbedarf $L_{stöch,Gasgemisch}$ des der Brennkraftmaschine zugeführten Gasgemisches nach Gleichung 8 kann Gleichung 11 in der Form

$$\sum_g c_{g,i} M_g = \frac{kT}{V \Delta p_i} \frac{\Delta m_{Luft,i}}{\lambda \sum_g a_{g,i} L_{stöch,g}} \qquad \text{(Gleichung 12)}$$

geschrieben werden.

Wenn das Gasgemisch nur zwei Teilchensorten bzw. Gase $g$ = 1, $g$ = 2 enthält oder bei Vernachlässigung weiterer Bestandteile gilt $c_{1,i} + c_{2,i} = 1$ und $a_{1,i} + a_{2,i} = 1$. Dann können aus Gleichung 12 und den Gleichungen $c_{1,i} + c_{2,i} = 1$ und $a_{1,i} + a_{2,i} = 1$ die Anteile $c_{1,i}$, $c_{2,i}$, der Luftbedarf $L_i = a_{1,i} L_1 + a_{2,i} L_2$ und der Heizwert $H_i = a_{1,i} + a_{2,i} H_2$ im Zeitintervall $i$ bestimmt werden. Beispielsweise gilt in der Näherung, dass das Gasgemisch nur Methan und Stickstoff enthält,

$$c_{Methan,i} M_{Methan} + c_{Stickstoff,i} M_{Stickstoff} = \frac{kT}{V \Delta p_i} \frac{\Delta m_{Luft,i}}{\lambda c_{Methan,i} \dfrac{M_{Methan}}{c_{Methan,i} M_{Methan} + c_{Stickstoff,i} M_{Stickstoff}} L_{Methan}}$$

$$\text{(Gleichung 13)}$$

($L_{Stickstolf}$ = 0). Aus dieser Gleichung und der Gleichung $c_{Methan,i} + c_{Stickstoff,i}$ = 1 werden die Anteile $c_{Methan,i}$ und

$c_{Stickstoff,i}$ und damit auch der Luftbedarf $L_i = \sum_g a_{g,i} L_g = a_{Methan,i} L_{Methan}$ und der Heizwert $H_i = \sum_g a_{g,i} H_g = a_{Methan,i} H_{Methan}$ des Gasgemisches im Zeitintervall $i$ bestimmt ($L_{Stickstoff} = 0$, $H_{Stickstoff} = 0$).

Vorteilhaft ist auch die vereinfachende Annahme, dass das Gasgemisch im Tank sich alleine aus H-Gas und L-Gas zusammensetzt. In dieser Näherung lautet Gleichung 12

$$c_{H-Gas,i} M_{H-Gas} + c_{L-Gas,i} M_{L-Gas} = \frac{kT}{V \Delta p_i} \frac{\Delta m_{Luft,i} \left( c_{H-Gas,i} M_{H-Gas} + c_{L-Gas,i} M_{L-Gas} \right)}{\lambda \left( c_{H-Gas,i} M_{H-Gas} L_{H-Gas} + c_{L-Gas,i} M_{L-Gas} L_{L-Gas} \right)} \cdot$$

$$\text{(Gleichung 14)}$$

Aus Gleichung 14 und der Gleichung $C_{H-Gas} + C_{L-Gas} = 1$ werden $C_{H-Gas}$, $C_{L-Gas}$, der Luftbedarf $L_i = a_{H-Gas,i} L_{H-Gas} + a_{L-Gas,i} L_{L-Gas}$ und der Heizwert $H_i = a_{H-Gas,i} H_{H-Gas} + a_{L-Gas,i} H_{L-Gas}$ im Zeitintervall $i$ bestimmt.

In einer weiteren alternativen Näherung wird angenommen, dass das Gasgemisch lediglich Methan und Stickstoff enthält, und Gleichung 8 alleine auf den Anteil von Methan und dessen Partialdruck bezogen,

$\Delta m_{Methan,i} = \dfrac{\Delta m_{Luft,i}}{\lambda L_{stöch,Methan}}$ . Mit Gleichung 7 kann dann ein $M_i$ bestimmt werden, das zur Ermittlung des Stickstoffanteils und/oder des Luftbedarfs und/oder des Brennwerts des Gasgemisches verwendet wird. Alternativ wird in Gleichung 7 in die Variable $M_i$ die Molekularmasse von Methan eingesetzt und so der Partialdruck $p_i$ von Methan im Gasgemisch $\Delta p_{Methan,i} = \dfrac{kT}{M_{Methan} V} \Delta m_i$ berechnet. Der Quotient $\Delta p_{Methan,i} / \Delta p_i$ aus dem Partialdruck von Methan und dem gemessenen Abfall des Gesamtdrucks ist gleich dem Stoffmengenanteil von Methan im Gasgemisch, aus dem wiederum der Luftbedarf, der Heizwert oder andere Parameter berechnet werden.

Alle beschriebenen Rechnungen können entweder zur Laufzeit des Verfahrens durchgeführt oder durch entsprechende Nachschlagetabellen (look up tables) ersetzt werden.

Vorzugsweise umfasst das erfindungsgemäße Verfahren zum Bestimmen der Zusammensetzung des Gasgemisches ferner eine Prüfung der Plausibilität der bestimmten Zusammensetzung. Wenn die bestimmte Zusammensetzung des Gasgemisches nicht plausibel ist, wird sie korrigiert und der korrigierte Wert der bestimmten Gaszusammensetzung gegebenenfalls der Steuerung der Brennkraftmaschine 16 zugrunde gelegt. Ein Beispiel für eine Plausibilitätsprüfung wird nachfolgend mit Bezug auf Fig. 2 beschrieben.

Fig. 2 ist ein schematisches Diagramm, in dem mögliche Messergebnisse in einem vorbestimmten Zeitintervall in einem kartesischen Koordinatensystem dargestellt sind. Der Abszisse ist die Masse $\Delta m_i$ des in dem vorbestimmten Zeitintervall aus dem Tank entnommenen Gasgemisches zugeordnet. Der Ordinate ist die durch diese Gasentnahme hervorgerufene Druckänderung $\Delta p_i$ zugeordnet. Eine erste Ursprungsgerade 31 und eine zweite Ursprungsgerade 32 markieren die Grenzen eines Bereichs 33, in dem plausible Wertepaare ($\Delta m_i$, $\Delta p_i$) liegen. Wenn beispielsweise bekannt ist, dass der Tank 10 reines H-Gas oder reines L-Gas oder eine beliebige Mischung aus H-Gas und L-Gas enthält, sind die Ursprungsgeraden 31, 32 diejenigen Geraden, die durch Gleichung 7 beschrieben werden, wenn für $M$ einmal die mittlere Teilchenmasse $M_{H-Gas}$ von H-Gas und in anderem Fall die mittlere Teilchenmasse $M_{L-Gas}$ von L-Gas eingesetzt wird.

Wenn darüber hinaus bekannt ist, dass der Tank 10 vor dem letzten Betankungsvorgang eine bestimmte Menge eines Gasgemisches mit einer bestimmten Zusammensetzung enthielt, sind die Ursprungsgeraden 31, 32 diejenigen Geraden, die durch Gleichung 7 definiert werden, wenn für die mittlere Teilchenmasse $M$ Werte eingesetzt werden, die sich ergeben, wenn das vor dem Betankungsvorgang im Tank 10 vorliegende Gasgemisch mit reinem H-Gas bzw. mit reinem L-Gas gemischt wird.

Es ist erkennbar, dass beispielsweise das Wertepaar ($\Delta m_a$, $\Delta p_a$) und das Wertepaar $\Delta m_b$, $\Delta p_b$) außerhalb des Bereichs 33 der plausiblen Wertepaare liegen. Derartige Wertepaare können sich bei einer Messung in einen vorbestimmten Zeitintervall beispielsweise aus Fehlern am Drucksensor 21, am Temperatursensor 22, an der Lambda-Sonde 18, am Gasmassenfluss-Messgerät 12 oder an anderen Einrichtungen ergeben. Jedes unplausible Wertepaar ($\Delta m_i$, $\Delta p_i$) wird vorzugsweise zur Feststellung eines Fehlers und wenn möglich auch zur Identifizierung bzw. Lokalisierung des Fehlers verwendet.

Darüber hinaus wird das unplausible Wertepaar $(\Delta m_a, \Delta p_a)$ oder $(\Delta m_b, \Delta p_b)$ wie durch die Pfeile 37, 38 angedeutet, korrigiert, bevor beispielsweise mit Gleichung 11 die mittlere Teilchenmasse $M_i$ des in dem vorbestimmten Zeitintervall $i$ aus dem Tank entnommenen Gasgemisches bestimmt wird.

Besonders vorteilhaft ist es, bei der beschriebenen Plausibilitätsprüfung auch die Messfehler von $\Delta m_i$ und $\Delta p_i$) und die Ungenauigkeit der Begrenzungen 31, 32 des Bereichs der plausiblen Wertepaare berücksichtigt. Beispielhaft ist in Fig. 2 mit dem Rechteck 39 der Fehlerbereich des Wertepaares $(\Delta m_b, \Delta p_b)$ angegeben (beispielsweise 1 x σ oder 3 x σ). Vorzugsweise wird dann beispielsweise ein unplausibles Wertepaar korrigiert, bevor es den weiteren Berechnungen zugrunde gelegt wird, jedoch wird ein Fehler an einem der Sensoren oder an einer sonstigen Einrichtung des Systems nur dann diagnostiziert, wenn kein Überlapp zwischen dem Fehlerbereich des Wertepaares und dem Bereich 33 der plausiblen Werte einschließlich angrenzender Unsicherheitsbereiche existiert.

Die beschriebene Plausibilitätsprüfung und gegebenenfalls eine Korrektur finden alternativ nicht mit dem Wertepaar $(\Delta m_i, \Delta p_i)$ sondern beispielsweise bei der daraus nach Gleichung 11 berechneten mittleren Teilchenmasse $L_i$ oder bei dem wie oben beschrieben berechneten Luftbedarf $L_i$ oder Heizwert $H_i$ statt.

Unplausible Wertepaare $(\Delta m_a, \Delta p_a)$, $(\Delta m_b, \Delta p_b)$ werden alternativ dazu verwendet, Kennlinien, insbesondere beispielsweise die Kennlinie des Gasmassenfluss-Messgeräts 12 oder eines im Luftansaugtrakt angeordneten Luftmassenfluss-Messgeräts, zu korrigieren. Die Korrektur einer Kennlinie erfolgt vorzugsweise nur in dem zugrunde liegenden vorbestimmten Zeitintervall $i$ verwendeten Betriebsparameterbereich.

Um die Messfehler der Wertepaare $(\Delta m_i, \Delta p_i)$ gering zu halten, wird vorzugsweise jedes vorbestimmte Zeitintervall $i$ solange gewählt oder solange ausgedehnt, bis statistische Streuung und Messfehler innerhalb eines vorbestimmten Bereichs (beispielsweise ± 2%) liegen.

Die oben dargestellten Berechnungen werden alternativ dahingehend abgewandelt, dass die gemessenen Druckwerte $p_i$ auf ein bestimmtes Temperaturniveau (z.B. 20°C = 293 K) normiert werden,

$$p_{i,normiert} = p_{i,mess} \frac{T_{norm}}{T_{mess}} \qquad \text{(Gleichung 15)}$$

und dann aus diesen normierten Messwerten des Tankdrucks eine normierte Druckänderung

$$\Delta p_{i,normiert} = p_{i,normiert} - p_{i+1,normiert} \qquad \text{(Gleichung 16)}$$

berechnet wird.

Vorzugsweise werden nach einem Betankungsvorgang bestimmte Betriebsparameterbereiche der Brennkraftmaschine (insbesondere Hochleistungsbereiche) erst dann freigegeben, wenn die Zusammensetzung des im Tank vorliegenden und aus diesem entnommenen und der Brennkraftmaschine zugeführten Gasgemisches bestimmt bzw. mit einer hinreichenden Genauigkeit bestimmt wurde. Anders ausgedrückt werden bestimmte Betriebsparameterbereiche erst freigegeben, wenn feststeht, dass der Kraftstoff eine Mindestqualität aufweist, die ausreicht, um in diesen Betriebsparameterbereichen eine Schädigung der Brennkraftmaschine 16 (beispielsweise durch übermäßig hohe Verbrennungsdruckgradienten) zu vermeiden.

Vorzugsweise wird die Zusammensetzung des Gasgemisches im Tank 10 nicht nur nach jedem Betankungsvorgang, sondern während des Betriebs der Brennkraftmaschine immer wieder wiederholt. Damit werden auch Veränderungen in der Zusammensetzung des Gasgemisches aufgrund einer Verdampfung einer flüssigen Komponente im Tank 10, aufgrund einer Kondensation einer im Gasgemisch enthaltenen Teilchensorte oder aufgrund einer Lösung einer Teilchensorte in der flüssigen Komponente im Tank erfasst. In diesem Fall resultieren der Bereich 33 und seine Grenzen 31, 32 daraus, wie stark sich die Zusammensetzung des Gasgemisches durch die beschriebenen Verdampfungs-, Kondensations- und Lösungs-Prozesse seit dem davor liegenden Zeitintervall $i$-1 verändert haben kann.

Vorzugsweise wird die Zusammensetzung des im Tank vorliegenden und dem Tank entnommenen und der Brennkraftmaschine 16 zugeführten Gasgemisches noch genauer bestimmt, indem die beschriebenen Verdampfungs-, Kondensations- und Lösungs-Prozesse berücksichtigt werden, wie es beispielsweise in der DE 10 2006 022 357.8 beschrieben ist. Umgekehrt kann das beschriebene Verfahren deutlich vereinfacht werden, indem die Anteile an Ethan, Propan, Butan und schwereren Kohlenwasserstoffen vernachlässigt werden und wie oben bei Gleichung 13 nur Methan und Stickstoff berücksichtigt werden.

Die Qualität und insbesondere der Luftbedarf des dem Tank 10 entnommenen und der Brennkraftmaschine 16 zugeführten Gasgemisches werden vorzugsweise während des gesamten Betriebs der Brennkraftmaschine 16 vom Steuergerät 20 auf eine der oben beschriebenen Weisen immer wieder neu bestimmt. Dazu weist das Steuergerät 20 vorzugsweise ein Computerprogramm in Form von Firmware oder Software auf, das die Drucksignale des Drucksensors 21 und die Temperatursignale des Temperatursensors 22 auf eine der oben beschriebenen Weisen auswertet und die Zusammensetzung des in einem jeweiligen Zeitintervall dem Tank 10 entnommenen und der Brennkraftmaschine 16 zugeführten Gasgemisches nach einem der oben beschriebenen Verfahren berechnet. Dies erfolgt vorzugsweise in der Berechnungseinrichtung 25.

Abweichend von der obigen Darstellung kann die mit dem Bezugszeichen 20 gekennzeichnete Vorrichtung ein von einem Steuergerät der Brennkraftmaschine 16 separates Gerät sein. Dieses separate Gerät ist vorzugsweise über einen Bus, besonders bevorzugt über einen CAN-Bus, mit dem Steuergerät der Brennkraftmaschine verbunden. Über den Bus oder eine andere Datenverbindung erhält das Steuergerät die Information über die von der Vorrichtung 20 bestimmte Zusammensetzung des dem Tank 10 entnommenen und der Brennkraftmaschine 16 zugeführten Gasgemisches.

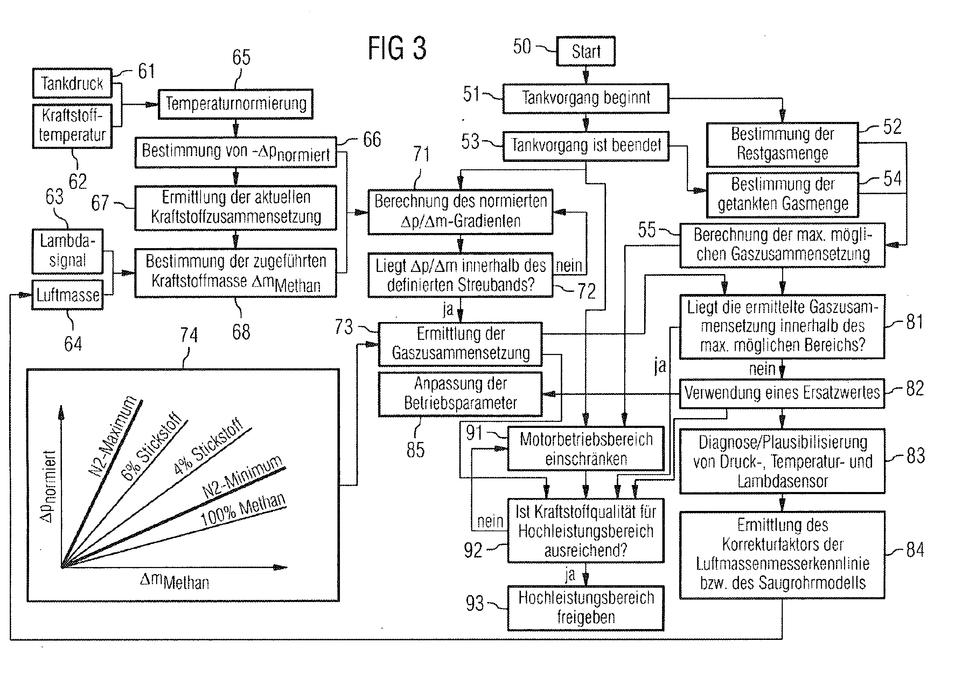

Fig. 3 ist ein schematisches Flussdiagramm eines Verfahrens zum Bestimmen der Zusammensetzung eines Gasgemisches in einem Tank gemäß der vorliegenden Erfindung. Dieses Verfahren kann in Software oder Firmware eines Steuergeräts einer Brennkraftmaschine implementiert bzw. durch die Software oder Firmware ausgeführt oder gesteuert werden. Beispielhaft ist in Fig. 3 das Verfahren so dargestellt, wie es durch einen Tankvorgang gestartet wird. Alternativ wird das Verfahren durch einen anderen Vorgang gestartet (beispielsweise durch eine Inbetriebnahme der Brennkraftmaschine) und/oder ständig wiederholt.

Das Verfahren startet 50 im vorliegenden Beispiel mit dem Beginn des Tankvorgangs (erster Schritt 51), bei dem in einem zweiten Schritt 52 die Restgasmenge im Tank 10 durch den Drucksensor 21 bestimmt wird. Am Ende des Tankvorgangs (dritter Schritt 53) wird die getankte Gasmenge in einem vierten Schritt 54 durch Druckmessung mittels des Drucksensors 21 bestimmt, und zwar aus der Differenz der Drücke im Tank 10 zu Beginn des Tankvorgangs und am Ende des Tankvorgangs. Aus der im zweiten Schritt 52 bestimmten Restgasmenge und der im vierten Schritt 54 bestimmten getankten Gasmenge sowie der bekannten Zusammensetzung des zu Beginn des Tankvorgangs im Tank 10 vorliegenden Gasgemisches wird im fünften Schritt 55 die maximal mögliche Gaszusammensetzung, d.h. insbesondere beispielsweise der maximale Methananteil, der minimale Stickstoffanteil und der resultierende maximale Luftbedarf, der maximale Heizwert sowie der minimale Methananteil, der maximale Stickstoffanteil und der resultierende minimale Luftbedarf oder der minimale Heizwert berechnet.

In einem sechsten Schritt 61 wird mithilfe des Drucksensors 21 der Gasdruck im Tank 10 bestimmt. In einem siebten Schritt 62 wird mithilfe des Temperatursensors 22 die Gastemperatur im Tank 10 bestimmt. In einem achten Schritt 63 wird mithilfe der Lambda-Sonde 18 der Lambda-Wert der Verbrennung in der Brennkraftmaschine 16 bestimmt. In einem neunten Schritt 64 wird mithilfe eines Luftmassenfluss-Messgeräts die der Brennkraftmaschine 16 in einem vorbestimmten Zeitintervall i zugeführte Luftmasse bestimmt. In einem zehnten Schritt 65 wird von dem Steuergerät 20 der von dem vom Drucksensor 61 empfangenen Drucksignal angezeigte Tankdruck nach Gleichung 15 normiert. In einem elften Schritt 66 wird vom Steuergerät nach Gleichung 16 aus den normierten Drücken am Anfang und am Ende des vorbestimmten Zeitintervalls die normierte Druckdifferenz berechnet. Unter Verwendung der in einem zwölften Schritt 67 ermittelten Kraftstoffzusammensetzung im vorangehenden Zeitintervall i-1 wird in einem 13. Schritt 68 vom Steuergerät 20 nach Gleichung 8 die Masse $\Delta m_i$ des der Brennkraftmaschine 16 im vorbestimmten Zeitintervall $i$ zugeführten Gasgemisches bestimmt. Alternativ wird die Masse $\Delta m_{Methan}$ als Äquivalent der Masse $\Delta m_i$ des tatsächlich zugeführten Gasgemisches berechnet.

In einem 14. Schritt 71 wird ein normierter Gradient $\Delta p_{normiert,i}/\Delta m_i$ von dem Steuergerät 20 berechnet. In einem 15. Schritt 72 wird bestimmt, ob dieser Gradient bzw. das entsprechende Wertepaar ($\Delta p_{normiert,i}$, $\Delta m_i$) innerhalb eines definierten Streubands bzw. des Bereichs 33 plausibler Wertepaare liegt. Wenn dies nicht der Fall ist, wird der normierte Gradient bzw. das normierte Wertepaar durch einen korrigierten Gradienten bzw. ein korrigiertes Wertepaar ersetzt, wie es oben anhand der Fig. 2 dargestellt wurde. Anschließend wird in einem 16. Schritt 73 die Zusammensetzung des Gasgemisches berechnet, wobei insbesondere in einem 17. Schritt 74, beispielsweise nach Gleichung 11, 12, 13 oder 14, die Anteile von Methan, Stickstoff oder auch anderen Teilchensorten im Gasgemisch bestimmt werden.

In einem 18. Schritt 81 wird ermittelt, ob die berechnete Zusammensetzung des Gasgemisches innerhalb eines plausiblen Bereichs liegt. Wenn dies nicht der Fall ist, wird in einem 19. Schritt 82 die unplausible Zusammensetzung des Gasgemisches durch eine korrigierte Zusammensetzung ersetzt. Der 18. Schritt 81 und der 19. Schritt 82 einerseits und der 15. Schritt 72 andererseits sind Alternativen, von denen in einem Verfahren vorzugsweise nur eine realisiert ist.

In einem 20. Schritt 83 wird aus der Unplausibilität der berechneten Zusammensetzung des Gasgemisches auf einen Defekt oder das Erfordernis der Anwendung eines Korrekturfaktors auf eine Kennlinie eines Sensors geschlossen. Zur Identifizierung bzw. Lokalisierung des Fehlers können weitere Informationen herangezogen werden.

In einem 21. Schritt 84 wird gegebenenfalls ein Korrekturfaktor ermittelt, beispielsweise ein Korrekturfaktor für die Kennlinie des Gasmassenfluss-Messgeräts 12, eines Luftmassenfluss-Messgeräts oder für ein Saugrohrmodell. Der 20. Schritt 83 und der 21. Schritt 84 werden vorzugsweise auch dann ausgeführt, wenn anstelle des 18. Schritts 81 und des 19. Schritts 82 der 15. Schritt 72 vorgesehen ist.

Die im 21. Schritt 84 ermittelten Korrekturfaktoren gehen in dem oder den nachfolgenden Zeitintervallen in die Bestimmung 61 des Tankdrucks, die Bestimmung 62 der Kraftstofftemperatur, die Bestimmung 63 des Lambda-Werts und/oder in die Bestimmung 64 der der Brennkraftmaschine 16 zugeführten Luftmasse ein.

In einem 22. Schritt 85 werden ein oder mehrere Betriebsparameter der Brennkraftmaschine 16 an die Zusammensetzung des der Brennkraftmaschine 16 zugeführten Gasgemisches angepasst. Zu diesen Betriebsparametern zählen insbesondere die Ansteuerzeiten und Öffnungsdauern der Einblaseventile und/oder weitere Stellparameter der Einblaseinrichtung 14, der Zündwinkel, die Phasen der Nockenwellen der Brennkraftmaschine für Ein- und/oder Auslassventile, die Abgasrückführrate, Einstellparameter weiterer im Luftpfad vorhandener Komponenten (beispielsweise von Drallklappen) und weitere Betriebsparameter. Ferner können Parameter des Saugrohrmodells, beispielsweise das Schluckverhalten der Brennkraftmaschine 16, angepasst werden.

Nach dem Ende 53 des Tankvorgangs werden einzelne Betriebsparameterbereiche der Brennkraftmaschine, beispielsweise Hochleistungsbereiche, eingeschränkt bzw. gesperrt. Dies erfolgt vorzugsweise auch in Abhängigkeit von dem im fünften Schritt 55 bestimmten Bereich möglicher Zusammensetzungen des Gasgemisches. Abhängig von der im 16. Schritt 73 oder im 18. Schritt 81 oder im 19. Schritt 82 bestimmten Zusammensetzung des der Brennkraftmaschine 16 zugeführten Gasgemisches oder deren Ersatzwert wird in einem 24. Schritt 92 festgestellt, ob die Kraftstoffqualität bzw. die Qualität des dem Tank 10 entnommenen und der Brennkraftmaschine 16 zugeführten Gasgemisches für eine Freigabe von Betriebsparameterbereichen und gegebenenfalls für welche ausreicht oder ob weitere Betriebsparameterbereiche eingeschränkt bzw. gesperrt werden müssen. Erforderlichenfalls erfolgt eine Einschränkung bzw. Sperrung von Betriebsparameterbereichen in einem 23. Schritt 91, möglichenfalls erfolgt eine Freigabe von Betriebsparameterbereichen, insbesondere von Hochleistungsbereichen in einem 25. Schritt 93.

Das Verfahren wird vorzugsweise aber nicht ausschließlich in einem bzw. gesteuert durch ein Steuergerät einer Brennkraftmaschine ausgeführt. Alternativ wird es in einer bzw. gesteuert durch eine von dem Steuergerät separate Vorrichtung ausgeführt. Besonders vorteilhaft ist eine Verbindung dieser separaten Vorrichtung mit dem Steuergerät über einen Bus, insbesondere über einen CAN-Bus.

Bezugszeichenliste

| | |
|---|---|
| 10 | Tank |
| 12 | Gasmassenfluss-Messgerät |
| 14 | Einblaseinrichtung |
| 16 | Brennkraftmaschine |
| 17 | Abgasleitung der Brennkraftmaschine 16 |
| 18 | Lambdasonde |
| 20 | Steuergerät |
| 21 | Drucksensor |
| 22 | Temperatursensor |
| 23 | Umgebungsdruck-Sensor |
| 24 | Gaspedal |
| 25 | Berechnungseinrichtung |
| 31 | erste Ursprungsgerade |
| 32 | zweite Ursprungsgerade |
| 33 | Bereich |
| 37 | Pfeil |
| 38 | Pfeil |
| 39 | Rechteck |
| 50 | Start |
| 51 | erster Schritt |
| 52 | zweiter Schritt |
| 53 | dritter Schritt |
| 54 | vierter Schritt |
| 55 | fünfter Schritt |
| 61 | sechster Schritt |
| 62 | siebter Schritt |
| 63 | achter Schritt |
| 64 | neunter Schritt |
| 65 | zehnter Schritt |
| 66 | elfter Schritt |

67    zwölfter Schritt
68    dreizehnter Schritt
71    vierzehnter Schritt
72    fünfzehnter Schritt
73    sechzehnte Schritt
74    siebzehnter Schritt
81    achtzehnter Schritt
82    neunzehnter Schritt
83    zwanzigster Schritt
84    einundzwanzigster Schritt
85    zweiundzwanzigster Schritt
91    dreiundzwanzigster Schritt
92    vierundzwanzigster Schritt
93    fünfundzwanzigster Schritt

**Patentansprüche**

1.  Verfahren zum Bestimmen der Zusammensetzung eines aus zwei Gasen mit jeweils bekannter mittlerer Teilchenmasse bestehenden Gasgemisches in einem Tank (10), mit folgenden Schritten:

    Bestimmen (62) einer Gastemperatur in dem Tank (10);
    Bestimmen (61) eines ersten Drucks in dem Tank (10) zu Beginn eines vorbestimmten Zeitintervalls;
    **dadurch gekennzeichnet, dass** das Verfahren folgende weitere Schritte aufweist:

    Entnehmen von Gasgemisch aus dem Tank (10);
    Bestimmen (63, 64, 67, 68) der Masse des Gasgemisches, das in dem Zeitintervall aus dem Tank (10) entnommen wird;
    Bestimmen (61) eines zweiten Drucks in dem Tank (10) am Ende des vorbestimmten Zeitintervalls;
    Bestimmen (71, 72, 73, 81, 82) der Zusammensetzung des Gasgemisches in dem Tank (10) aus dem ersten Druck, dem zweiten Druck und der Masse des in dem Zeitintervall aus dem Tank (10) entnommenen Gasgemisches,
    wobei der Schritt des Bestimmens der Zusammensetzung folgenden Schritt umfasst:

    Bestimmen (71) einer mittleren Teilchenmasse $M_i$ des Gasgemisches aus der entnommenen Masse $\Delta m_i$ und der Differenz $\Delta p = p_{i+1} - p_i$ des ersten Drucks $p_i$ und des zweiten Drucks $p_{i+1}$.

2.  Verfahren nach Anspruch 1, bei dem die entnommene Masse mit einem Gasmassenfluss-Messgerät (12) bestimmt wird.

3.  Verfahren nach Anspruch 1, wobei der Schritt des Bestimmens der Masse des Gasgemisches folgende Schritte umfasst:

    Verbrennen des in dem vorbestimmten Zeitintervall aus dem Tank (10) entnommenen Gasgemisches mit Luft;
    Bestimmen (64) der Masse der Luft, die für die Verbrennung des in dem vorbestimmten Zeitintervall aus dem Tank (10) entnommenen Gasgemisches verwendet wird;
    Bestimmen (63) des Lambda-Werts der Verbrennung;
    Bestimmen (68) der Masse des in dem vorbestimmten Zeitintervall aus dem Tank (10) entnommenen Gasgemisches aus der Masse der für die Verbrennung verwendeten Luft, dem Lambda-Wert und einem stöchiometrischen Luftbedarf des Gasgemisches.

4.  Verfahren nach Anspruch 3, bei dem als Näherung angenommen wird, dass der brennbare Anteil des Gasgemisches nur Methan umfasst.

5.  Verfahren nach Anspruch 3 oder 4, bei dem die Masse der für die Verbrennung verwendeten Luft mit einem Gasmassenfluss-Messgerät bestimmt wird.

6.  Verfahren nach Anspruch 3 oder 4, bei dem der Schritt des Verbrennens in einer Brennkraftmaschine (16) ausgeführt wird, und bei dem die Masse der für die Verbrennung verwendeten Luft aus Betriebsparametern der Brennkraftmaschine (16) bestimmt wird.

7. Verfahren nach einem der vorangehenden Ansprüche, ferner mit folgenden Schritten:

Prüfen (72, 81) der Plausibilität der bestimmten Zusammensetzung des Gasgemisches;
Korrigieren (82) der bestimmten Gaszusammensetzung, wenn diese nicht plausibel ist.

8. Verfahren nach einem der vorangehenden Ansprüche, ferner mit folgendem Schritt:

Sperren (91) eines vorbestimmten Wertebereichs eines Betriebsparameters einer Brennkraftmaschine (16), der das Gasgemisch als Brenngas zugeführt wird, bis die Gaszusammensetzung bestimmt ist.

9. Vorrichtung (20) zum Bestimmen der Zusammensetzung eines aus zwei Gasen mit jeweils bekannter mittlerer Teilchenmasse bestehenden Gasgemisches für eine Brennkraftmaschine (16), mit folgenden Merkmalen:

einem mit einem Drucksensor (21) verbundenen Drucksignaleingang zum Empfangen eines Drucksignals, das einen Druck in einem Tank (10) anzeigt;
einem Temperatursensor (22) zum Ermitteln einer Gastemperatur in dem Tank (10);
**dadurch gekennzeichnet, dass** die Vorrichtung folgende weitere Merkmale aufweist:

einem mit einem Gasmassenfluss-Messgerät (12) verbundenen Gasflusssignaleingang zum Empfangen eines Gasflusssignals, das einen Gasfluss anzeigt, und/oder einem Betriebsparametersignaleingang zum Empfangen eines Betriebsparametersignals, das einen Betriebsparameter der Brennkraftmaschine (16) anzeigt, wobei das
Betriebsparametersignal ein Lambdasignal ist;
entweder einer Berechnungseinrichtung (25), umfassend Mittel zum Berechnen der Zusammensetzung des Gasgemisches in dem Tank (10) aus einer mittleren Teilchenmasse $M_i$ einer in einem vorbestimmten Zeitintervall aus dem Tank (10) entnommenen Menge des Gasgemisches, wobei die mittlere Teilchenmasse $M_i$ aus einem ersten Druck in dem Tank (10) zu Beginn des vorbestimmten Zeitintervalls, einem zweiten Druck in dem Tank (10) am Ende des vorbestimmten Zeitintervalls und einer Masse der in dem vorbestimmten Zeitintervall aus dem Tank (10) entnommenen Menge des Gasgemisches berechnet wird, oder einer Berechnungseinrichtung (25), umfassend Mittel zum Berechnen der Zusammensetzung des Gasgemisches in dem Tank (10) aus einem ersten Druck in dem Tank (10) zu Beginn eines vorbestimmten Zeitintervalls, einem zweiten Druck in dem Tank am Ende des vorbestimmten Zeitintervalls und dem Betriebsparameter der Brennkraftmaschine (16) in dem vorbestimmten Zeitintervall;
einem Steuersignalausgang zum Ausgeben eines Steuersignals zur Steuerung eines Betriebsparameters der Brennkraftmaschine (16) in Abhängigkeit von der Zusammensetzung des Gasgemisches, die von der Berechnungseinrichtung (25) berechnet ist.

10. Vorrichtung (20) nach Anspruch 9, wobei die Vorrichtung (20) dazu ausgebildet ist, um die Schritte eines Verfahrens nach einem der Ansprüche 1 bis 7 auszuführen oder zu steuern.

11. Vorrichtung (20) nach einem der Ansprüche 9 oder 10, **dadurch gekennzeichnet, dass** die Vorrichtung (20) ein Steuergerät für die Brennkraftmaschine ist, die zur Steuerung und/oder Regelung von Betriebsparametern der Brennkraftmaschine ausgebildet ist.

12. Vorrichtung (20) nach Anspruch 11, ferner mit einer Schnittstelle zur Verbindung der Vorrichtung (20) mit einem Steuergerät für die Brennkraftmaschine über einen Bus oder eine andere Datenleitung.

13. Vorrichtung (20) nach einem der Ansprüche 9 bis 12, wobei die Vorrichtung (20) ausgebildet ist, einen vorbestimmten Wertebereichs eines Betriebsparameters einer Brennkraftmaschine (16), der das Gasgemisch als Brenngas zugeführt wird, zu sperren, bis die Zusammensetzung des Gasgemisches bestimmt ist.

**Claims**

1. Method for determining the composition of a gas mixture consisting of two gases, each with a known average particle mass, in a tank (10), with the following steps:

determination (62) of a gas temperature in the tank (10);
determination (61) of a first pressure in the tank (10) at the start of a predetermined time interval;
**characterized in that** the method has the following further steps:

extraction of gas mixture from the tank (10);
determination (63, 64, 67, 68) of the mass of the gas mixture which is extracted from the tank (10) in the time interval;
determination (61) of a second pressure in the tank (10) at the end of the predetermined time interval;
determination (71, 72, 73, 81, 82) of the composition of the gas mixture in the tank (10) from the first pressure, from the second pressure and from the mass of the gas mixture extracted from the tank (10) in the time interval,
the step of determining the composition comprising the following step:

determination (71) of an average particle mass $M_i$ of the gas mixture from the extracted mass $\Delta m_i$ and from the difference $\Delta p = p_{i+1} - p_i$ between the first pressure $p_i$ and the second pressure $p_{i+1}$.

2.  Method according to Claim 1, in which the extracted mass is determined by means of a gas mass flow meter (12).

3.  Method according to Claim 1, the step of determining the mass of the gas mixture comprising the following steps:

combustion of the gas mixture extracted from the tank (10) in the predetermined time interval with air;
determination (64) of the mass of the air which is used for the combustion of the gas mixture extracted from the tank (10) in the predetermined time interval;
determination (63) of the lambda value of the combustion;
determination (68) of the mass of the gas mixture extracted from the tank (10) in the predetermined time interval from the mass of the air used for combustion, from the lambda value and from a stoichiometric air requirement of the gas mixture.

4.  Method according to Claim 3, in which it is assumed as an approximation that the combustible fraction of the gas mixture comprises only methane.

5.  Method according to Claim 3 or 4, in which the mass of the air used for the combustion is determined by means of a gas mass flow meter.

6.  Method according to Claim 3 or 4, in which the step of combustion is carried out in an internal combustion engine (16), and in which the mass of the air used for combustion is determined from operating parameters of the internal combustion engine (16).

7.  Method according to one of the preceding claims, furthermore with the following steps:

checking (72, 81) of the plausibility of the determined composition of the gas mixture;
correction (82) of the determined gas composition if this is not plausible.

8.  Method according to one of the preceding claims, furthermore with the following step:

blocking (91) of a predetermined value range of an operating parameter of an internal combustion engine (16), to which the gas mixture is supplied as fuel gas, until the gas composition is determined.

9.  Apparatus (20) for determining the composition of a gas mixture consisting of two gases, each with a known average particle mass, for an internal combustion engine (16), with the following features:

a pressure-signal input, connected to a pressure sensor (21), for receiving a pressure signal which indicates a pressure in a tank (10);
a temperature sensor (22) for ascertaining a gas temperature in the tank (10);
**characterized in that** the apparatus has the following further features:

a gas-flow signal input, connected to a gas mass flow meter (12), for receiving a gas-flow signal which indicates a gas flow, and/or an operating-parameter signal input for receiving an operating-parameter signal which indicates an operating parameter of the internal combustion engine (16), the operating-parameter signal being a lambda signal; either a calculation device (25) comprising means for calculating the composition of the gas mixture in the tank (10) from an average particle mass $M_i$ of a gas mixture quantity extracted from the tank (10) in a predetermined time interval, the average particle mass $M_i$ being calculated from a first pressure in the tank (10) at the start of the predetermined time interval, from a second pressure in the tank (10) at the end of the predetermined time interval and from mass of the gas mixture quantity extracted from the tank (10) in the predetermined time interval, or a calculation device (25) comprising means for calculating the composition of the gas mixture in the tank (10) from a first pressure in the tank (10) at the start of a predetermined time interval, from a second pressure in the tank at the end of the predetermined time interval and from the operating parameter of the internal combustion engine (16) in the predetermined time interval;

a control-signal output for outputting a control signal for controlling an operating parameter of the internal combustion engine (16) as a function of the composition of the gas mixture which is calculated by the calculation device (25).

10. Apparatus (20) according to Claim 9, the apparatus (20) being designed to carry out or to control the steps of a method according to one of Claims 1 to 7.

11. Apparatus (20) according to either one of Claims 9 and 10, **characterized in that** the apparatus (20) is a control unit for the internal combustion engine which is designed for the control and/or regulation of operating parameters of the internal combustion engine.

12. Apparatus (20) according to Claim 11, furthermore with an interface for connecting the apparatus (20) to a control unit for the internal combustion engine via a bus or another data line.

13. Apparatus (20) according to one of Claims 9 to 12, the apparatus (20) being designed to block a predetermined value range of an operating parameter of an internal combustion engine (16), to which the gas mixture is supplied as fuel gas, until the composition of the gas mixture is determined.

**Revendications**

1. Procédé pour déterminer la composition d'un mélange de gaz constitué de deux gaz ayant respectivement une masse de particule moyenne connue dans un réservoir (10), comprenant les étapes suivantes :

la détermination (62) d'une température de gaz dans le réservoir (10) ;
la détermination (61) d'une première pression dans le réservoir (10) au début d'un intervalle de temps prédéterminé ;
**caractérisé en ce que** le procédé comporte les autres étapes suivantes :
le prélèvement du mélange de gaz du réservoir (10) ;
la détermination (63, 64, 67, 68) de la masse du mélange de gaz, qui est prélevé du réservoir (10) dans l'intervalle de temps ;
la détermination (61) d'une seconde pression dans le réservoir (10) à la fin de l'intervalle de temps prédéterminé ;
la détermination (71, 72, 73, 81, 82) de la composition du mélange de gaz dans le réservoir (10) à partir de la première pression, de la seconde pression et de la masse du mélange de gaz prélevé du réservoir (10) dans l'intervalle de temps,
dans lequel l'étape de détermination de la composition comprend l'étape suivants :

la détermination (71) d'une masse de particule moyenne $M_i$ du mélange de gaz à partir de la masse prélevée $\Delta m_i$ et de la différence $\Delta p = p_{i+1} - p_i$ entre la première pression $p_i$ et la seconde pression $p_{i+1}$.

2. Procédé selon la revendication 1, dans lequel la masse prélevée est déterminée avec un appareil de mesure de débit massique de gaz (12).

3. Procédé selon la revendication 1, dans lequel l'étape de la détermination de la masse du mélange de gaz comprend les étapes suivantes :

la combustion avec de l'air du mélange de gaz prélevé du réservoir (10) dans l'intervalle de temps prédéterminé ;
la détermination (64) de la masse de l'air, qui est utilisé pour la combustion du mélange de gaz prélevé du réservoir (10) dans l'intervalle de temps prédéterminé ;
la détermination (63) de la valeur lambda de la combustion ;
la détermination (68) de la masse du mélange de gaz prélevé du réservoir (10) dans l'intervalle de temps prédéterminé à partir de la masse de l'air utilisé pour la combustion, de la valeur lambda et d'un besoin d'air stoechiométrique du mélange de gaz.

4. Procédé selon la revendication 3, dans lequel on suppose comme approximation que la fraction combustible du mélange de gaz ne comprend que du méthane.

5. Procédé selon la revendication 3 ou 4, dans lequel la masse de l'air utilisé pour la combustion est déterminée avec un appareil de mesure du débit massique de gaz.

6. Procédé selon la revendication 3 ou 4, dans lequel l'étape de la combustion est réalisée dans un moteur à combustion interne (16) et dans lequel la masse de l'air utilisé pour la combustion est déterminée à partir de paramètres de fonctionnement du moteur à combustion interne (16).

7. Procédé selon l'une quelconque des revendications précédentes, comprenant en outre les étapes suivantes :

la vérification (72, 81) de la vraisemblance de la composition déterminée du mélange de gaz ; et
la correction (82) de la composition gazeuse déterminée lorsque celle-ci n'est pas vraisemblable.

8. Procédé selon l'une quelconque des revendications précédentes, comprenant en outre l'étape suivante :

le blocage (91) d'une plage de valeurs prédéterminée d'un paramètre de fonctionnement d'un moteur à combustion interne (16), auquel est acheminé le mélange de gaz sous la forme d'un gaz de combustion jusqu'à ce que la composition gazeuse soit déterminée.

9. Dispositif (20) pour déterminer la composition d'un mélange de gaz, pour un moteur à combustion interne (16), constitué de deux gaz ayant respectivement une masse de particule moyenne connue, comprenant les caractéristiques suivantes :

une entrée de signal de pression reliée à un capteur de pression (21) pour la réception d'un signal de pression, qui indique une pression dans un réservoir (10) ;
un capteur de température (22) pour déterminer une température de gaz dans le réservoir (10) ; **caractérisé en ce que** le dispositif présente les autres caractéristiques suivantes :
une entrée de signal de flux de gaz reliée à un appareil de mesure de débit massique de gaz (12) pour la réception d'un signal de flux de gaz, qui indique un flux de gaz, et/ou une entrée de signal de paramètre de fonctionnement pour la réception d'un signal de paramètre de fonctionnement, qui indique un paramètre de fonctionnement du moteur à combustion interne (16), dans lequel le signal de paramètre de fonctionnement est un signal lambda ;
un dispositif de calcul (25), comprenant des moyens pour calculer la composition du mélange de gaz dans le réservoir (10) à partir d'une masse de particule moyenne $M_i$ d'une quantité du mélange de gaz prélevée du réservoir (10) dans un intervalle de temps prédéterminé, dans lequel la masse de particule moyenne $M_i$ est calculée à partir d'une première pression dans le réservoir (10) au début de l'intervalle de temps prédéterminé, d'une seconde pression dans le réservoir (10) à la fin de l'intervalle de temps prédéterminé et d'une masse de la quantité de mélange de gaz prélevée du réservoir (10) dans l'intervalle de temps prédéterminé, ou un dispositif de calcul (25), comprenant des moyens pour calculer la composition du mélange de gaz dans le réservoir (10) à partir d'une première pression dans le réservoir (10) au début d'un intervalle de temps prédéterminé, d'une seconde pression dans le réservoir à la fin de l'intervalle de temps prédéterminé et du paramètre de fonctionnement du moteur à combustion interne (16) dans l'intervalle de temps prédéterminé ;
une sortie de signal de commande pour délivrer un signal de commande pour commander un paramètre de fonctionnement du moteur à combustion interne (16) en fonction de la composition du mélange de gaz, qui est calculée par le dispositif de calcul (25).

10. Dispositif (20) selon la revendication 9, dans lequel le dispositif (20) est conformé pour exécuter ou commander les étapes d'un procédé selon l'une quelconque des revendications 1 à 7.

**11.** Dispositif (20) selon l'une quelconque des revendications 9 ou 10, **caractérisé en ce que** le dispositif (20) est un appareil de commande pour le moteur à combustion interne, qui est conformé pour commander et/ou régler des paramètres de fonctionnement du moteur à combustion interne.

**12.** Dispositif (20) selon la revendication 11, comprenant en outre une interface pour relier le dispositif (20) à un appareil de commande pour le moteur à combustion interne par le biais d'un bus ou d'une autre ligne de données.

**13.** Dispositif (20) selon l'une quelconque des revendications 9 à 12, dans lequel le dispositif (20) est conformé pour bloquer une plage de valeurs prédéterminée d'un paramètre de fonctionnement d'un moteur à combustion interne (16), auquel est acheminé le mélange de gaz sous la forme d'un gaz de combustion, jusqu'à ce que la composition du mélange de gaz soit déterminée.

EP 2 084 510 B1

FIG 1

FIG 2

## FIG 3

EP 2 084 510 B1

Tankdruck 61

Kraftstofftemperatur

62

63

Lambdasignal

Luftmasse

64

Temperaturnormierung 65

Bestimmung von $-\Delta p_{normiert}$ 66

67 Ermittlung der aktuellen
Kraftstoffzusammensetzung

68 Bestimmung der zugeführten
Kraftstoffmasse $\Delta m_{Methan}$

74

$\Delta p_{normiert}$ / $\Delta m_{Methan}$

N2-Maximum
6% Stickstoff
4% Stickstoff
N2-Minimum
100% Methan

50 Start

51 Tankvorgang beginnt

53 Tankvorgang ist beendet

52 Bestimmung der
Restgasmenge

54 Bestimmung der
getankten Gasmenge

71 Berechnung des normierten
$\Delta p/\Delta m$-Gradienten

72 Liegt $\Delta p/\Delta m$ innerhalb des
definierten Streubands? | nein

ja

73 Ermittlung der
Gaszusammensetzung

85 Anpassung der
Betriebsparameter

55 Berechnung der max. möglichen Gaszusammensetzung

81 Liegt die ermittelte Gaszusammensetzung innerhalb des
max. möglichen Bereichs?

nein

82 Verwendung eines Ersatzwertes

ja

91 Motorbetriebsbereich
einschränken

nein

92 Ist Kraftstoffqualität für
Hochleistungsbereich
ausreichend?

ja

93 Hochleistungsbereich
freigeben

83 Diagnose/Plausibilisierung
von Druck-, Temperatur- und
Lambdasensor

84 Ermittlung des
Korrekturfaktors der
Luftmassenmesserkennlinie
bzw. des Saugrohrmodells

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006022357 B3
- DE 9303589 U1
- US 5367999 A
- US 20020095262 A1
- DE 102006022357

**In der Beschreibung aufgeführte Nicht-Patentliteratur**

- **Williams et al.** *Physics of gases,* 01. Marz 2006, 97-100